# EUROPEAN PATENT SPECIFICATION

(11) **EP 3 697 201 B1**
(45) Date of publication and mention of the grant of the patent: **11.08.2021**
(21) Application number: 18799448.8
(22) Date of filing: 18.10.2018
(51) Int. Cl.: A01G 27/04, A01G 9/029, A01G 13/02

(54) **A CIRCULAR LID**
KREISFÖRMIGER DECKEL
COUVERCLE CIRCULAIRE

(30) Priority: 20.10.2017 EP 17197607
(43) Date of publication of application: 26.08.2020
(73) Proprietor: Land Life Company B.V., 1092 AD Amsterdam (NL)
(72) Inventor: LÖVENSTEIN, Harrie Maurice, 1078 GA Amsterdam (NL); ASJES, Arnout Jan, 2051 HL Overveen (NL); RUYS, Jurriaan, 1017 RM Amsterdam (NL)
(74) Representative: Cramwinckel, Michiel
(86) International application number: PCT/EP2018/078611
(87) International publication number: WO 2019/077065

(56) References cited:
- WO-A1-2015/063243
- WO-A1-2016/118011
- DE-U1-202006 019 002
- GB-A- 2 507 796
- US-A- 5 315 783
- US-A1- 2011 308 152
- US-A1- 2014 215 909

## Description

The invention is directed to a circular lid. Especially a circular lid which may be used as part of a planting aid product further comprising a container comprising an annular compartment and a central open channel, where in use a plant is positioned.

Such a lid as part of a planting aid product is described in WO2015/063243. This publication describes a planting aid product provided with a flat circular lid provided with an opening in its centre. The lid covers an annular compartment filled with a volume of water. At the centre of the container a central open channel is provided through which in use a plant, especially a tree, grows. The tree is provided with water from the annular compartment via a wick which runs from the annular compartment via the central open channel to the roots of the tree. The lid and the container are made of a biodegradable paper or wood based pulp with waterproofing additives. The planting aid product is buried in the ground, covered by a moisture resistant cover sheet which in turn is covered by a layer of soil. The container should provide water to the tree for a certain period of time such that the trees get established. After a while the pulp product will disintegrate and become part of the soil surrounding the tree.

WO2016/118011 describes a rectangular lid as part of a planting aid product provided with an opening in its centre.

A problem with the planting aid as described above is that the lid may be damaged due to rain fall. The object of the present invention is to provide a lid which in use will not damage as much as the prior art lid.

This is achieved with the following lid. A circular lid having a lower end and an upper end and comprising a circular projection and an opening in the lid within the circular projection and provided with one or more planes descending from the circular projection towards the opening and 4 to 10 radially positioned first projections having a flat upper surface defining the upper end of the lid, wherein the circular projection divides the circular lid in an outer circular part and an inner circular part and wherein the outer circular part is provided with one or more planes descending from the circular projection to the circular edge of the lid, and wherein the first radially positioned projections run from a radial position in the outer circular part to a radial position within the inner circular part.

Applicants found that when such a lid is used as lid for a planting aid product the damage due to rain fall is significantly less. It even allows one to use a planting aid device having such a lid without having to use the moisture resistant cover sheet as in the prior art product. The projections provide structural strength and the descending planes direct any rainfall water towards the opening. In this manner the lid will have less or even no water which remains on the upper surface and which has time to weaken the material of the lid. Further advantages will be described below.

In this specification terms like upper, lower, vertical and horizontal are used to describe features of this invention. These terms relate to the orientation the features, like the lid and container, are normally used and are in no manner to be used to narrowly interpreted the invention.

The circular projection suitably divides the circular lid in an outer circular part and an inner circular part. The outer circular part may be provided with one or more planes descending from the circular projection to the circular edge of the lid. To provide the circular projection somewhere between the edge of the lid and the opening is advantageous because it will provide the lid more structural strength. The descending planes in the outer circular part will direct any rainfall towards the edge of the lid where it will drop into or on the ground. This avoids a prolonged wetness of soil covering the lid and thus a prohibitive high load on the lid.

The flat upper surface suitably has a surface area of between 10 and 50 % of the total projected circular area of the lid. Such a flat upper surface is especially relevant when the lid is composed of a biodegradable paper or wood based pulp or any other material which requires a drying step when manufacturing the lid. The manufacturing process may involve a so-called pulping step which produces a wet intermediate lid product. This intermediate lid product is subsequently dried. In this drying step it is advantageous to position the lid upside down on a flat surface. In that part of the process the structure may deform due to a not adequate support. For this reason the lid suitably has a flat surface as its upper end which provides the desired support. On the other hand it is preferred to have a high area ratio for the descending planes to increase the dewatering capacity of the lid. When designing an optimal lid a balance will have to be reached to fulfil both described requirements.

The lid is suitably provided with a downward projected flap. This flap suitably has a frusto conical shape. The lower end of the flap will be the lower end of the circular lid. The frusto conical shaped flap allows to horizontally place the lid on a container which is not necessary horizontally positioned. This is especially advantageous when the lid is used as part of a planting aid product further comprising a container as described in the afore referred to prior art publication. It is envisaged that when a large number of such containers are buried in the ground a horizontal positioning of every container will in practice not be achieved. A horizontal positioning of the lid is nevertheless required to achieve the optimal dewatering via the descending planes of the lid. By having a relatively larger frusto conical shaped flap such positioning on the outer upper edge of the container is possible. This is because the inner surface of the frusto conical flap of a horizontally positioned lid can fully contact the upper circular edge of a non-horizontal positioned container. For such positioning it is preferred that the material of the lid is somewhat flexible, like when a biodegradable pulp is used as the material for the lid. The lid may be fixed to this outer edge of the container by a clamping connection.

The circular projection, the circular lid and the opening are suitably positioned co-axial with respect to an axis perpendicular to the plane of the circular lid. This is advantageous because the positioning of the opening relative to a container which is enclosed by the lid can only be performed in a single manner. This avoids wrong positioning and/or additional handlings when placing the lid.

The first projections may have any shape. The flat upper surfaces of all the first projections are suitably in one plane. This provides a stable support surface when the lid is placed upside down. The one or more first projections are positioned radially. The lid comprises 4 to 10 radially positioned first projections. A lid having a commercially applicable design may have 6, 7 or 8 radially positioned projections, preferably 6.

The circular projection divides the circular lid in an outer circular part and an inner circular part and the first radially positioned projections run from a radial position in the outer circular part to a radial position within the inner circular part. The first projections may even run from the conical shaped flap. In such a design the radially outer wall of the first projection is present in the same conical plane as the frusto conical shaped flap.

It is preferred that between the radially positioned first projections in the outer circular part a second radial projection is present having a flat upper surface. The upper surface of such second projections are suitably flush with the flat upper surface of the radially projected first projections.

The lid may be composed of any material, like for example polymers, such as polyethylene and polypropylene. When the lid is used as part of a planting aid product it is preferred that the material of the lid is biodegradable. Suitable biodegradable materials are for example bio-degradable polymers such as PLA (poly lactic acid). Preferably the biodegradable material is biodegradable pulp as made from a biodegradable lignocellulosic fibrous material. Typically such lignocellulosic fibrous material is obtained by chemically or mechanically separating the cellulose fibres from wood, waste of crops, fibre crops or waste paper, especially waste carton. Examples of fibre crops are *Miscanthus spp,* Bamboo *(Bambusoideae spp)* or Guayule (*Parthenium argentatum*). The pulp lid product itself may be made by well known processes.

The biodegradable pulp may comprise a water resistant compound to improve the water resistance properties. A suitable water resistant compound is a wax. The wax may be added to the emulsion containing pulp fibres when preparing a lid pulp product. Examples of such processes are described in GB456434 and GB276395. Applicants have found that the circular lid as composed of a biodegradable pulp product, the lid pulp product, is suitably made by a process comprising the following steps:
(a) spraying a water-resistant compound on the surface of a starting, preferably dried, lid pulp product thereby obtaining a lid pulp product made of biodegradable pulp and the water-resistant compound having a melting temperature of above 60 °C and
(b) pressing the lid pulp product obtained in step (a) in a mould at a temperature above the melting temperature of the water-resistant compound, and
(c) releasing the lid pulp product from the mould and reducing the temperature to below the melting temperature of the water-resistant compound.

The water-resistant compound in this process has a melting point of above 60 °C and preferably below 200 °C. The water-resistant compound is preferably a hydrophobic compound. Preferably the water-resistant compound is a wax. Waxes having the desired melting points are known to achieve a good water-resistance. The wax may be a petroleum or natural derived paraffin or microwax or a mixture thereof. Optionally the wax may be obtained by a Fischer-Tropsch reaction starting from hydrogen and carbon monoxide. The melting temperature of the wax may be between 60°C and 120°C and preferably between 70 and 120 °C.

In step (a) the water-resistant compound is sprayed on the surface of a starting three-dimensional shaped biodegradable pulp product. Such a lid pulp product is preferably dry such that the water-resistant compound can easily adhere and even absorb into the pulp material. The amount of water-resistant compound applied per surface area of the lid pulp product can be easily determined by the skilled person. For a typical wax having the preferred melting properties as described above between 50-600 g/m² may be applied.

The starting lid pulp product may comprise additives such as bio-repellents or plant based pesticides to protect the lid pulp product against insects and small mammals. Example of a suitable bio-resistant is capsaicin. These additives may be added to the emulsion containing pulp fibres when preparing a lid pulp product. Preferably such additives are added to the water-resistant compound. In this manner they will be deposited at or close to the surface of the biodegradable lid pulp product which will enhance their function as resistant to insects and the like. This is especially advantageous when the biodegradable lid pulp product is part of a planting aid product as here described.

The pressure in step (b) as exercised on the lid pulp product is preferably above 0.1 MPa and more preferably above 1 MPa. Suitably the pressure is below 5 MPa and more preferably below 2 MPa.

The lid according to the invention is preferably used as part of a planting aid product where the lid closes a container at its upper end. Preferably the material of the container is the same or different biodegradable pulp material as the material of the lid. Possible biodegradable materials are exemplified above. The container preferably comprises a water-resistant compound which is preferably added to the container by the process as described for the lid pulp product.

The planting aid product suitably comprises a lid according to the invention and a container comprising an annular compartment defining a central open channel. When the planting aid product is used a plant is positioned in this central open channel. The annular compartment is closed at its lower end and open at its upper end such to hold a volume of water. The circular lid closes the upper open end of the annular compartment. The opening of the lid aligns with the central open channel of the container. This allows water as collected on the descending planes of the lid to flow to the opening and to the plant as present in the central channel of the container. The annular compartment suitably has a downwardly tapering outer wall and an upwardly tapering inner wall as illustrated in WO2015063243.

The planting aid product further comprises means to transport water from the annular compartment to the plant as present in the central channel. Such means may be a wick as illustrated in WO2015063243. The central channel may further be provided with a shroud which protects the upper end of the young plant as illustrated in WO2015063243. Such a shroud surrounds the plant and may run from the central channel to a position above the lid. The dimensions of the shroud may be such that one or more openings are provided between the shroud and the descending planes. In this way water can enter the central channel via such a slit. This may be achieved by providing an opening in the lid having the shape of a hexagon while the shroud has a circular cross section at the level of the opening. The wall of the shroud may also be provided with openings at the elevation of the opening in the lid allowing water to flow via such openings from the descending planes to the central channel.

The planting aid product is preferably used to aid the planting of a plant in a ground medium having a ground surface. The container is hereby buried in the ground medium, i.e. soil, such that the lid is substantially flush with the ground surface. The lid may be covered with ground medium and preferably only the outer circular part of the lid is covered with ground medium and the inner circular part is kept free of ground medium. This is advantageous because it provides anchoring of the lid against the wind on the one hand and visibility of the planting aid product and the young plant on the other hand. If the lid becomes wet the inner circular part can dry quickly because it is exposed to the sun. No moisture resistant cover is required and occasional rain water is beneficially used for growing the plant.

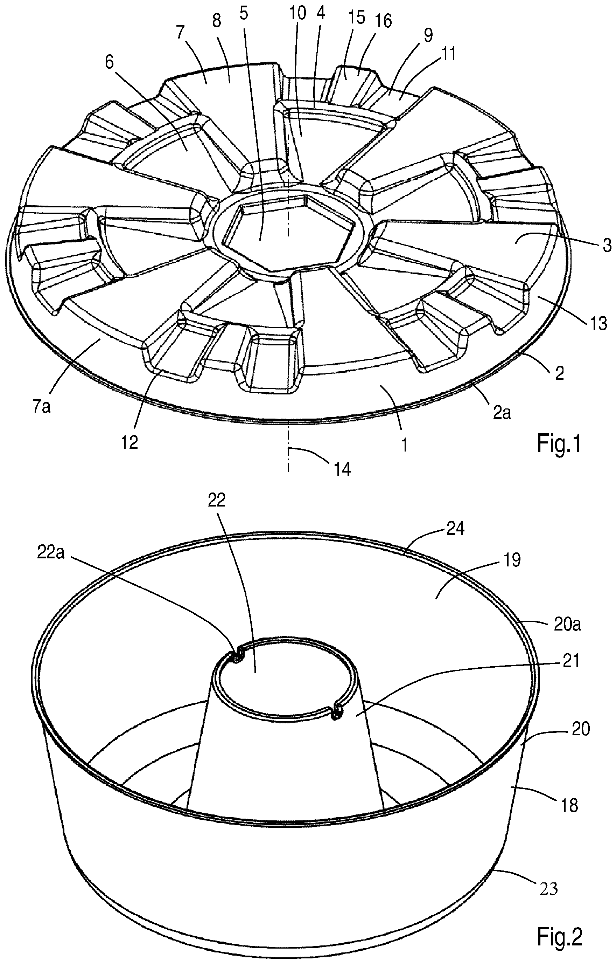

The invention will be further illustrated making use of Figures 1-3.

Figure 1 shows a circular lid 1 according to this invention having a lower end 2 and an upper end 3 and a circular projection 4. An opening 5 is present within the circular projection 4. The circular projection 4, the circular lid 1 and the opening 5 are positioned co-axial with respect to an axis 14 perpendicular to the plane of the circular lid 1. The circular projection 4 divides the circular lid in an outer circular part 9 and an inner circular part 10. Six radially positioned planes 6 descend from the circular projection 4 towards the opening 5 and twelve radially positioned planes 11 descend from the circular projection 4 to the circular edge 12 of the lid 1. Six radially positioned first projections 7 having a flat upper surface 8 are shown. The flat upper surfaces 8 define the upper end 3 of the lid 1. Further a downward projected flap 13 having a frusto conical shape is shown running from circular edge 12 downwards. This distance will depend on the dimensions of the lid. But when used in combination with a planting aid product the vertical distance between the upper end 3 of the lid and the lower end 2 may be between 1 and 6 cm and preferably between 2 and 6 cm. The lower end 2 of the circular lid 1 is the lower end of this flap 13. This lower end of flap 13 is provided with a small horizontally extending rim 2a which improves the strength of the lid. The radially outer wall 7a of the first projection 7 is present in the same conical plane as the frusto conical shaped flap 13.

Between the six radially positioned first projections 7 in the outer circular part 9 a second radial projection 15 is present having a flat upper surface 16. The upper surface 16 is flush with the flat upper surface 8 of the radially projected projections 7.

Figure 2 shows a container 18 which may be used in combination with lid 1 of Figure 1. The annular compartment 18 is provided with an annular compartment 19 with a downwardly tapering outer wall 20 and an upwardly tapering inner wall 21 defining a central open channel 22. The annular compartment 19 is closed at its lower end 23 and open at its upper end 24. A lid 1 encloses the upper open end 24 of the annular compartment 19. Opening 5 of the lid 1 aligns with the central open channel 22 of the container 18. Also shown are two indentations 22a at the upper edge of the inner wall 21 through which a wick (not shown) may be positioned which runs from the annular compartment 19 to the central channel 22. The upper edge 20a of the outer wall 20 may be provided with a horizontally extending rim having a length of for example 0.5 cm to enhance the strength of the annular compartment and to improve the fixing connection with lid 1.

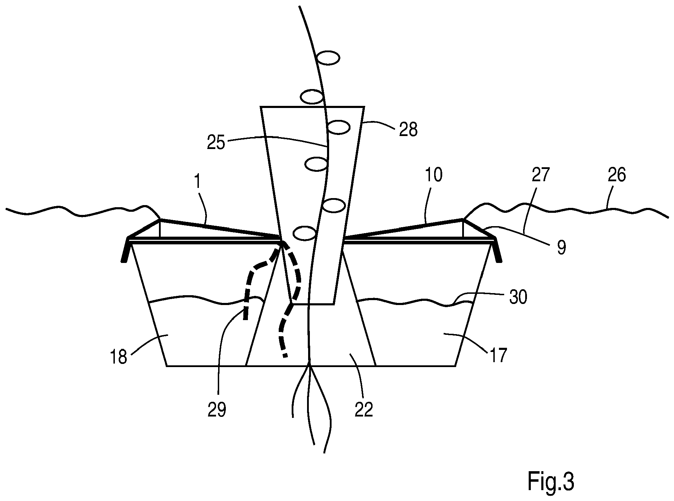

Figure 3 shows a planting aid product 17 provided with a lid 1 and a container 18. Further shown are a wick 29 connecting the water having water level 30 as present in the annular compartment 19 with the central channel 22. A shroud 28 surrounds the plant 25. The container 18 is buried in the ground medium 27 such that the lid 1 is substantially flush with the ground surface 26. The outer circular part 9 of the lid 1 is covered with ground medium 27 and the inner circular part 10 is kept free of ground 27.

## Claims

1. A circular lid (1) as part of a planting aid having a lower end (2) and an upper end (3) and comprising
- a circular projection (4) and an opening (5) in the lid (1) within the circular projection (4) and provided with one or more planes (6) descending from the circular projection (4) towards the opening (5),
- 4 to 10 radially positioned first projections (7) having a flat upper surface (8) defining the upper end (3) of the lid (1),
wherein the circular projection (4) divides the circular lid (1) in an outer circular part (9) and an inner circular part (10) and wherein the outer circular part (9) is provided with one or more planes (11) descending from the circular projection (4) to the circular edge (12) of the lid (1), and
wherein the first radially positioned projections (7) run from a radial position in the outer circular part (9) to a radial position within the inner circular part (10).

2. A lid according to claim 1, wherein the flat upper surface has a surface area of between 10 and 50 % of the total projected circular area.

3. A lid according to any one of claims 1-2, wherein the lower end (2) of the circular lid (1) is the lower end of a downward projected flap (13) having a frusto conical shape.

4. A lid according to any one of claims 1-3, wherein the circular projection (4), the circular lid (1) and the opening (5) are positioned co-axial with respect to an axis (14) perpendicular to the plane of the circular lid (1).

5. A lid according to any one of claims 1-4, wherein the lid (1) has 6 radially positioned first projections (7).

6. A lid according to any one of claims 1-5, wherein between the radially positioned first projections (7) in the outer circular part (9) a second radial projection (15) is present having a flat upper surface (16) flush with the flat upper surface (8) of the radially projected first projections (7).

7. A lid according to any one of claims 1-6, wherein the lid (1) is composed of biodegradable pulp.

8. A process to prepare a circular lid pulp product according to claim 7, comprising the following steps:
(a) spraying a water-resistant compound on the surface of a starting lid pulp product thereby obtaining a lid pulp product made of biodegradable pulp and the water-resistant compound having a melting temperature of above 60 °C and
(b) pressing the lid pulp product obtained in step (a) in a mould at a temperature above the melting temperature of the water-resistant compound, and
(c) releasing the lid pulp product from the mould and reducing the temperature to below the melting temperature of the water-resistant compound.

9. A planting aid product (17) comprising a lid (1) according to any one of claims 1-7 or obtainable by a process according to claim 8 and a container (18) comprising an annular compartment (19) with a downwardly tapering outer wall (20) and an upwardly tapering inner wall (21) defining a central open channel (22), through which a symmetry axis runs, where in use a plant is positioned, wherein the annular compartment (19) is closed at its lower end (23) and open at its upper end (24) and wherein the circular lid (1) closes the upper open end (24) of the annular compartment (19) and wherein the opening (5) of the lid (1) aligns with the central open channel (22) of the container (18).

10. A planting aid product according to claim 9, wherein the lid (1) and the container (18) are composed of biodegradable pulp.

11. Use of a planting aid product (17) according to any one of claims 9-10 having a lid (1) according to any one of claims 2-7 or obtainable according to a process according to claim 8 to aid the planting of a plant (25) in a ground medium having a ground surface (26), wherein the container is buried in the ground medium (27) such that the lid is substantially flush with the ground surface (26) and wherein the outer circular part (9) is covered with ground medium (27) and the inner circular part (10) is kept free of ground medium (27).

## Patentansprüche

1. Kreisförmiger Deckel (1) als Teil einer Pflanzhilfe, der ein unteres Ende (2) und ein oberes Ende (3) aufweist und Folgendes umfasst
- einen kreisförmigen Vorsprung (4) und eine Öffnung (5) in dem Deckel (1) innerhalb des kreisförmigen Vorsprungs (4) und versehen mit einer oder mehreren Ebenen (6), die von dem kreisförmigen Vorsprung (4) zu der Öffnung (5) hin absteigen,
- 4 bis 10 radial positionierte erste Vorsprünge (7), die eine flache obere Oberfläche (8) aufweisen, die das obere Ende (3) des Deckels (1) definiert,
wobei der kreisförmige Vorsprung (4) den kreisförmigen Deckel (1) in einen äußeren kreisförmigen Teil (9) und einen inneren kreisförmigen Teil (10) unterteilt und wobei der äußere kreisförmige Teil (9) mit einer oder mehreren Ebenen (11) versehen ist, die von dem kreisförmigen Vorsprung (4) zu der kreisförmigen Kante (12) des Deckels (1) absteigen, und
wobei die ersten radial positionierten Vorsprünge (7) von einer radialen Position in dem äußeren kreisförmigen Teil (9) zu einer radialen Position innerhalb des inneren kreisförmigen Teils (10) verlaufen.

2. Deckel nach Anspruch 1, wobei die flache obere Oberfläche einen Oberflächenbereich von zwischen 10 und 50 % des gesamten vorspringenden kreisförmigen Bereichs aufweist.

3. Deckel nach einem der Ansprüche 1-2, wobei das untere Ende (2) des kreisförmigen Deckels (1) das untere Ende einer nach unten vorspringenden Klappe (13) ist, die eine kegelstumpfförmigen Form aufweist.

4. Deckel nach einem der Ansprüche 1-3, wobei der kreisförmige Vorsprung (4), der kreisförmige Deckel (1) und die Öffnung (5) hinsichtlich einer Achse (14) senkrecht zu der Ebene des kreisförmigen Deckels (1) koaxial positioniert sind.

5. Deckel nach einem der Ansprüche 1-4, wobei der Deckel (1) 6 radial positionierte erste Vorsprünge (7) aufweist.

6. Deckel nach einem der Ansprüche 1-5, wobei zwischen den radial positionierten ersten Vorsprüngen (7) in dem äußeren kreisförmigen Teil (9) ein zweiter radialer Vorsprung (15) vorhanden ist, der eine flache obere Oberfläche (16) aufweist, die bündig mit der flachen oberen Oberfläche (8) der radial vorspringenden ersten Vorsprünge (7) ist.

7. Deckel nach einem der Ansprüche 1-6, wobei der Deckel (1) aus biologisch abbaubarem Zellstoff besteht.

8. Verfahren zur Herstellung eines Zellstoffprodukts mit kreisförmigem Deckel nach Anspruch 7, das die folgenden Schritte umfasst:
(a) Sprühen einer wasserbeständigen Verbindung auf die Oberfläche eines Ausgangsdeckelzellstoffprodukts, wobei dadurch ein Deckelzellstoffprodukt aus biologisch abbaubarem Zellstoff und die wasserbeständige Verbindung, die eine Schmelztemperatur von über 60 °C aufweist, erhalten wird, und
(b) Pressen des Deckelzellstoffprodukts, das in Schritt (a) erhalten wird, in eine Form bei einer Temperatur oberhalb der Schmelztemperatur der wasserbeständigen Verbindung und
(c) Lösen des Deckelzellstoffprodukts aus der Form und Verringern der Temperatur auf unter die Schmelztemperatur der wasserbeständigen Verbindung.

9. Pflanzhilfsprodukt (17), das einen Deckel (1) nach einem der Ansprüche 1-7 oder erhältlich durch ein Verfahren nach Anspruch 8 und einen Behälter (18) umfasst, der ein ringförmiges Fach (19) mit einer sich nach unten zuspitzenden Außenwand (20) und einer sich nach oben zuspitzenden Innenwand (21) umfasst, die einen zentralen offenen Kanal (22) definiert, durch den eine Symmetrieachse verläuft, wo in Verwendung eine Pflanze positioniert ist, wobei das ringförmige Fach (19) an seinem unteren Ende (23) geschlossen und an seinem oberen Ende (24) offen ist und wobei der kreisförmige Deckel (1) das obere offene Ende (24) des ringförmigen Fachs (19) schließt und wobei die Öffnung (5) des Deckels (1) mit dem zentralen offenen Kanal (22) des Behälters (18) ausgerichtet ist.

10. Pflanzhilfsprodukt nach Anspruch 9, wobei der Deckel (1) und der Behälter (18) aus biologisch abbaubarem Zellstoff bestehen.

11. Verwendung eines Pflanzhilfsprodukts (17) nach einem der Ansprüche 9-10, das einen Deckel (1) nach einem der Ansprüche 2-7 oder erhältlich gemäß eines Verfahrens nach Anspruch 8 aufweist, um das Pflanzen einer Pflanze (25) in einem Bodenmedium zu unterstützen, das eine Bodenoberfläche (26) aufweist, wobei der Behälter in dem Bodenmedium (27) derart vergraben ist, dass der Deckel im Wesentlichen bündig mit der Bodenoberfläche (26) ist und wobei der äußere kreisförmige Teil (9) mit dem Bodenmedium (27) bedeckt ist und der innere kreisförmige Teil (10) frei von Bodenmedium (27) gehalten wird.

## Revendications

1. Couvercle circulaire (1) en tant que partie d'un élément d'aide à la plantation ayant une extrémité inférieure (2) et une extrémité supérieure (3) et comprenant
- une saillie circulaire (4) et une ouverture (5) dans le couvercle (1) à l'intérieur de la saillie circulaire (4) et doté d'un ou plusieurs plans (6) descendant de la saillie circulaire (4) vers l'ouverture (5),
- 4 à 10 premières saillies positionnées radialement (7) ayant une surface supérieure plate (8) définissant l'extrémité supérieure (3) du couvercle (1),
dans lequel la saillie circulaire (4) divise le couvercle circulaire (1) en une partie circulaire extérieure (9) et une partie circulaire intérieure (10) et dans lequel la partie circulaire extérieure (9) est dotée d'un ou plusieurs plans (11) descendant de la saillie circulaire (4) jusqu'au bord circulaire (12) du couvercle (1), et
dans lequel les premières saillies positionnées radialement (7) s'étendent d'une position radiale dans la partie circulaire extérieure (9) à une position radiale à l'intérieur de la partie circulaire intérieure (10).

2. Couvercle selon la revendication 1, dans lequel la surface supérieure plate a une superficie comprise entre 10 et 50 % de la superficie circulaire totale projetée.

3. Couvercle selon l'une quelconque des revendications 1 à 2, dans lequel l'extrémité inférieure (2) du couvercle circulaire (1) est l'extrémité inférieure d'un rabat projeté vers le bas (13) ayant une forme tronconique.

4. Couvercle selon l'une quelconque des revendications 1 à 3, dans lequel la saillie circulaire (4), le couvercle circulaire (1) et l'ouverture (5) sont positionnés de manière coaxiale par rapport à un axe (14) perpendiculaire au plan du couvercle circulaire (1).

5. Couvercle selon l'une quelconque des revendications 1 à 4, dans lequel le couvercle (1) a 6 premières saillies positionnées radialement (7).

6. Couvercle selon l'une quelconque des revendications 1 à 5, dans lequel entre les premières saillies positionnées radialement (7) dans la partie circulaire extérieure (9), une seconde saillie radiale (15) est présente, ayant une surface supérieure plate (16) affleurante avec la surface supérieure plate (8) des premières saillies projetées radialement (7).

7. Couvercle selon l'une quelconque des revendications 1 à 6, dans lequel le couvercle (1) est composé de pâte biodégradable.

8. Procédé permettant de préparer un produit de pâte pour couvercle circulaire selon la revendication 7, comprenant les étapes suivantes :
(a) la pulvérisation d'un composé imperméable à l'eau sur la surface d'un produit de pâte initial pour couvercle, obtenant ainsi un produit de pâte pour couvercle fait de pâte biodégradable et du composé imperméable à l'eau ayant une température de fusion supérieure à 60 °C et
(b) le pressage du produit de pâte pour couvercle obtenu à l'étape (a) dans un moule à une température supérieure à la température de fusion du composé imperméable à l'eau, et
(c) la libération du produit de pâte pour couvercle du moule et la diminution de la température en dessous de la température de fusion du composé imperméable à l'eau.

9. Produit d'aide à la plantation (17) comprenant un couvercle (1) selon l'une quelconque des revendications 1 à 7 ou pouvant être obtenu par un procédé selon la revendication 8 et un récipient (18) comprenant un compartiment annulaire (19) avec une paroi extérieure effilée vers le bas (20) et une paroi intérieure effilée vers le haut (21) définissant un canal central ouvert (22), à travers lequel passe un axe de symétrie, où lors de l'utilisation une plante y est positionnée, dans lequel le compartiment annulaire (19) est fermé à son extrémité inférieure (23) et ouvert à son extrémité supérieure (24) et dans lequel le couvercle circulaire (1) ferme l'extrémité supérieure ouverte (24) du compartiment annulaire (19) et dans lequel l'ouverture (5) du couvercle (1) s'aligne avec le canal central ouvert (22) du conteneur (18).

10. Produit d'aide à la plantation selon la revendication 9, dans lequel le couvercle (1) et le récipient (18) sont composés de pâte biodégradable.

11. Utilisation d'un produit d'aide à la plantation (17) selon l'une quelconque des revendications 9 à 10 ayant un couvercle (1) selon l'une quelconque des revendications 2 à 7 ou pouvant être obtenu selon un procédé selon la revendication 8 pour aider à la plantation d'une plante (25) dans un milieu de sol ayant une surface de sol (26), dans lequel le conteneur est enterré dans le milieu de sol (27) de telle sorte que le couvercle affleure sensiblement la surface de sol (26) et dans lequel la partie circulaire extérieure (9) est recouverte d'un milieu de sol (27) et la partie circulaire intérieure (10) est maintenue exempte de milieu de sol (27).
